# EUROPÄISCHE PATENTSCHRIFT

(11) **EP 0 639 595 B1**
(45) Veröffentlichungstag und Bekanntmachung des Hinweises auf die Patenterteilung: **16.04.1997**
(21) Anmeldenummer: 94112114.7
(22) Anmeldetag: 03.08.1994
(51) Int. Cl.: C08G 18/28, C08G 18/66, C09D 7/00

(54) **Als Verdickungsmittel geeignete Polyurethane und ihre Verwendung zur Verdickung wässriger Systeme**
Polyurethanes suitable as thickener and their use in thickening aqueous systems
Polyuréthanes utilisés comme agents d'épaississant et leur utilisation pour épaississement des systèmes aqueux

(30) Priorität: 16.08.1993 DE 4327481
(43) Veröffentlichungstag der Anmeldung: 22.02.1995
(73) Patentinhaber: BAYER AG, 51368 Leverkusen (DE)
(72) Erfinder: König, Klaus, Dr., D-51519 Odenthal (DE); Mazanek, Jan, Dr., D-51061 Köln (DE); Schwindt, Jürgen, Dr., D-51373 Leverkusen (DE); Dietrich, Manfred, Dr., D-51373 Leverkusen (DE); Klein, Gerhard, Dr., D-40789 Monheim (DE)

(56) Entgegenhaltungen:
- EP-A- 0 096 882
- EP-A- 0 103 147
- EP-A- 0 307 775
- EP-A- 0 495 373
- EP-A- 0 498 442

## Beschreibung

Die Erfindung betrifft neue, als Verdickungsmittel für wäßrige Systeme geeignete hydrophil/hydrophobe wasserlösliche oder -dispergierbare Polyurethane, die sich durch eine besonders effiziente Verdickungswirkung auszeichnen, sowie ihre Verwendung zur Verdickung wäßriger Systeme.

Verdickungsmittel auf Polyurethanbasis für wäßrige Systeme werden in zahlreichen Veröffentlichungen beschrieben (vgl. z.B. DE-OS 1 444 243, DE-OS 3 630 319, EP-A-0-031 777, EP-A-0 307 775, EP-A-0 495 373, US-PS 4 079 028, US-PS 4 155 892, US-PS 4 499 233 oder US-PS 5 023 309).

Diesen Verdickungsmitteln des Standes der Technik gemeinsam ist das gleichzeitige Vorliegen von (i) hydrophilen Segmenten in einer Menge von mindestens 50 Gew.-%, (ii) hydrophoben Segmenten in einer Menge von maximal 10 Gew.-% und (iii) Urethangruppen. Unter "hydrophilen Segmenten" sind hierbei insbesondere Polyetherketten mit mindestens 5 Kettengliedern zu verstehen, deren Alkylenoxid-Einheiten zumindest zu 60 Mol-% aus Ethylenoxideinheiten bestehen. Unter "hydrophoben Segmenten" sind hierbei insbesondere Kohlenwasserstoff-Segmente mit mindestens 6 Kohlenstoffatomen zu verstehen, die innerhalb der Kette, und/oder vorzugsweise endständig eingebaut sind.

Auch die nachstehend beschriebenen erfindungsgemäßen Verdickungsmittel entsprechen vorzugsweise dieser Definition.

Diese Polyurethanverdicker eignen sich als Hilfsmittel für die Einstellung von rheologischen Eigenschaften von wäßrigen Systemen wie z.B. Auto- und Industrielacken, Putz- und Anstrichfarben, Druck- und Textilfarben, Pigmentdruckpasten, pharmazeutischen, kosmetischen Zubereitungen, Pflanzenschutzformulierungen oder Füllstoffdispersionen.

Obwohl die bekannten Polyurethanverdicker eine breite Anwendung finden, weisen sie für viele Anwendungsbereiche eine zu niedrige Verdickerwirkung auf. Dies hat zur Folge, daß sie entweder in vergleichsweise hohen Konzentrationen eingesetzt werden müssen, oder aber daß andere Maßnahmen zur Erhöhung der Viskosität ergriffen werden müssen wie z.B. die Erhöhung der Pigment- bzw. Feststoffkonzentration. In solchen Fällen kann es aber zu unerwünschten Veränderungen der anwendungstechnischen Eigenschaften der hergestellten Farben oder anderen Zubereitungen, wie z.B. bezüglich des Verlaufs, Aushärtungsverhaltens, Glanzes oder des Deckvermögens kommen.

Ein besonderes Problem beim Einsatz von Polyurethanverdickern liegt darin, daß sie nicht nur eine gute Wirkung im Bereich von niedrigen Schergeschwindigkeiten (was vor allem für das Absetzverhalten und den Verlauf von z.B. Farben wichtig ist) zeigen müssen, sondern auch bei hohen Schergeschwindigkeiten (high-shear-Bereich), die beim Auftragen der Zubereitungen z.B. mit Pinsel oder Rolle oder aber beim Verspritzen auftreten. Aus diesem Grunde werden nach dem Stand der Technik in der Regel zwei Grundtypen von Verdickern für den jeweiligen Bereich der Schergeschwindigkeiten in einer Zubereitung eingesetzt oder aber weitere Hilfsstoffe zugesetzt, wie z.B. Lösemittel zum Herabsetzen der low-shear-Viskosität.

In der Vergangenheit wurden viele Versuche unternommen, um die Wirksamkeit der wäßrigen Polyurethanverdicker zu verbessern. So konnte beispielsweise die Verdickerwirkung im Bereich niedriger Schergeschwindigkeiten (low-shear-Bereich) durch Erhöhung der Länge oder des Anteils an hydrophoben Endgruppen verbessert werden, wobei jedoch die Wirksamkeit solcher Verdicker im high-shear-Bereich für viele Anwendungsbereiche nicht ausreichend ist. Auf der anderen Seite wurden Verbesserungen im high-shear-Bereich z.B. durch den Einbau von substituierten Ethandiolen oder Ethylendiaminen mit langen hydrophoben Seitenketten erzielt, die jedoch wiederum keine ausreichende Wirksamkeit im low-shear-Bereich zeigen.

Diesen Verdickern ist somit gemeinsam, daß sie als hydrophobe Gruppen entweder endständige Alkylgruppen oder aber (gegebenenfalls zusätzlich) durch Umsetzung von hydrophobe seitenständige Gruppen enthaltenden kurzkettigen Diolen oder Diaminen mit z.B. Diisocyanatprepolymeren in Polymerketten eingebaute verzweigte Gruppen enthalten.

Die der Erfindung zugrundeliegende Aufgabe bestand daher darin, neue Verdickungsmittel auf Polyurethanbasis für wäßrige bzw. überwiegend wäßrige Systeme zur Verfügung zu stellen, die eine ausgewogene Verdickerwirkung sowohl im low- als auch im high-shear-Bereich aufweisen.

Diese Aufgabe konnte mit der Bereitstellung der nachstehend näher beschriebenen erfindungsgemäßen hydrophil/hydrophoben wasserlöslichen oder -dispergierbaren Polyurethane gelöst werden. Erfindungswesentlich ist hierbei der gezielte Einbau ausgewählter hydrophiler bzw. hydrophober Segmente durch Verwendung eines speziellen Alkoholgemischs als Reaktionspartner für die Isocyanatkomponente.

Gegenstand der Erfindung sind als Verdickungsmittel für wäßrige Systeme geeignete, wasserlösliche oder -dispergierbare Polyurethane, die in ein- oder mehrstufiger, unter Einhaltung eines NCO/OH-Äquivalentverhältnisses von 0,8:1 bis 1,4:1 erfolgter Reaktion hergestellte Umsetzungsprodukte
einer Alkoholkomponente a) mit
einer Isocyanatkomponente b) einer (mittleren) NCO-Funktionalität von 1,5 bis 2,5, bestehend aus mindestens einem organischen Isocyanat der Formel

R₁(NCO)ₓ

darstellen, dadurch gekennzeichnet, daß die Alkoholkomponente a)
a1) zu 25 bis 80 Mol-% aus Verbindungen der Formel

   R₂-O-A_{y}H
a2) zu 10 bis 60 Mol-% aus Verbindungen der Formel

   HO-A_{z}-(BO)_{z'}-A_{z"}-H

   und zu
a3) 5 bis 60 Mol-% aus Verbindungen der Formel

   HO-R₃-OH

   besteht, wobei in diesen Formeln
   - R₁: für einen gegebenenfalls inerte Substituenten aufweisenden aliphatischen, cycloaliphatischen, aromatischen oder araliphatischen Kohlenwasserstoffrest mit 6 bis 28 Kohenstoffatomen steht,
   - R₂: für einen aliphatischen Kohlenwasserstoffrest mit 12 bis 24 Kohlenstoffatomen steht,
   - R₃: für einen aliphatischen oder araliphatischen, gegebenenfalls Ethersauerstoffatome aufweisenden Kohlenwasserstoffrest mit 4 bis 36 Kohlenstoffatomen steht, wobei zwischen den beiden Hydroxylgruppen mindestens 3 Kohlenstoffatome angeordnet sind, und wobei das Zahlenverhältnis von Kohlenstoffatomen zu gegebenenfalls vorliegenden Ethersauerstoffatomen bei mindestens 2,5:1 liegt,

A) für einen Alkylenoxidrest mit 2 oder 3 Kohlenstoffatomen steht, wobei der Anteil an Resten mit 3 Kohlenstoffatomen nicht größer als 40 Mol.-% ist, und unterschiedliche Alkylenoxidreste in beliebiger Verteilung vorliegen können,
B) für einen aliphatischen Kohlenwasserstoffrest mit 2 bis 18 Kohlenstoffatomen, einen cycloaliphatischen Kohlenwasserstoffrest mit 4 bis 13 Kohlenstoffatomen oder einen aromatischen Kohlenwasserstoffrest mit 6 bis 15 Kohlenstoffatomen, steht,
   - x: für eine ganze oder (im statistischen Mittel) gebrochene Zahl von 1,5 bis 2,5 steht,
   - y: für eine Zahl von 5 bis 200 steht,
   - z und z": jeweils für Zahlen von 0 bis 400 stehen, mit der Maßgabe, daß die Summe z + z" 10 bis 400 ergibt, und
   - z': für 0 oder 1 steht,
   wobei sich die genannten Prozentangaben zu 100 ergänzen und der Gewichtsanteil der Rest R₂ und R₃, bezogen auf das Gesamtgewicht der Komponente a), weniger als 15 Gew.-% ausmacht.

Gegenstand der Erfindung ist auch die Verwendung dieser Polyurethane zur Verdickung wäßriger Systeme.

Die Alkoholkomponente al) besteht aus mindestens einem hydrophob/hydrophilen, einwertigen Alkohol der Formel

R₂-O-A_{y}H

für welche
R₂, A und y die bereits oben genannte Bedeutung haben.

Vorzugsweise stehen
- R₂: für einen aliphatischen Kohlenwasserstoffrest mit 16 bis 22, insbesondere 16 bis 18 Kohlenstoffatomen,
- A: für Ethylenoxid und/oder Propylenoxid, mit der Maßgabe, daß mindestens 60 Mol-%, besonders bevorzugt 100 Mol-%, der Reste für Ethylenoxidreste stehen, und
- y: für eine Zahl von 30 bis 150.

Die Herstellung der Polyetheralkohole a1) erfolgt in an sich bekannter Weise durch Alkoxylierung von entsprechenden einwertigen Alkoholen der Formel

R₂-OH

unter Verwendung von Ethylenoxid und gegebenenfalls Propylenoxid im Gemisch und/oder in beliebiger Reihenfolge. Geeignete Starter sind beispielsweise die isomeren Dodecanole, Tetradecanole, Hexadecanole, Octadecanole, Behenylalkohol, Alkohole, wie sie z.B. bei der Hydrierung von Fettsäuregemischen anfallen oder Gemische derartiger einwertiger Alkohole. Besonders bevorzugt werden die entsprechenden linearen primären Alkohole als Starter zur Herstellung der Alkoholkomponente a1) eingesetzt.

Bei der Alkoholkomponente a2) handelt es sich um mindestens ein hydrophiles Diol der allgemeinen Formel

HO-A_{z}-(BO)_{z'}-A_{z''}-H

für welches
- A: die bereits oben genannte Bedeutung bzw. bevorzugte Bedeutung hat,
- B: die bereits oben genannte Bedeutung hat und vorzugsweise für einen aliphatischen Kohlenwasserstoffrest mit 2 bis 6 Kohlenstoffatomen, einen cycloaliphatischen Kohlenwasserstoffrest mit 6 Kohlenstoffatomen oder einen aromatischen Kohlenwasserstoffrest mit 6 bis 13 Kohlenstoffatomen, steht,
- z und z'': die vorstehend genannte Bedeutung haben und vorzugsweise jeweils für Zahlen von 0 bis 300 stehen, mit der Maßgabe, daß die Summe z + z'' 100 bis 300 ergibt, und
- z': für 0 oder 1, vorzugsweise für 0 steht.

Die Herstellung der Diole a2) erfolgt ebenfalls durch eine an sich bekannte Alkoxylierung geeigneter Startermoleküle unter Verwendung von Ethylenoxid und gegebenenfalls Propylenoxid entsprechend den bereits oben gemachten Angaben. Geeignete Startermoleküle sind beispielsweise Wasser, Ethylenglykol, Oligoethylenglykole, Propylenglykol, Oligopropylenglykole, die isomeren Butandiole oder Hexandiole, Neopentylglykol, Hydrochinon, Resorcin, 1,4-Dihydroxyhexan, 4,4'-Dihydroxydiphenylmethan oder 1,4-Bis-(hydroxymethyl)-cyclohexan. Besonders bevorzugt werden Wasser oder Ethylenglykol als Starter eingesetzt und Ethylenoxid als einziges Alkylenoxid verwendet, so daß es sich bei der Komponente a2) um Polyethylenglykole handelt.

Bei der Alkoholkomponente a3) handelt es sich um Diole der Formel

HO-R₃-OH

für welche R₃ die bereits oben genannte Bedeutung hat. Vorzugsweise handelt es sich um solche Diole, für welche R₃ für einen linearen oder verzweigten, vorzugsweise linearen aliphatischen Kohlenwasserstoffrest mit 4 bis 36, insbesondere 6 bis 18 Kohlenstoffatomen steht, der gegebenenfalls auch Ethersauerstoffatome aufweisen kann, jedoch mit der Maßgabe, daß das Zahlenverhältnis von Kohlenstoffatomen zu Ethersauerstoffatomen bei mindestens 2,5:1, vorzugsweise mindestens 3:1 liegt.

Konkrete Beispiele für geeignete Diole a3) sind Butandiol-1,4, Neopentylglykol, Hexandiol-1,6, Di-, Tri- und Tetrapropylenglykol, Octandiol-1,8, 2-Ethylhexandiol-1,3, 2,2,4-Trimethylpentandiol-1,3, 2,4,4-Trimethylhexandiol-1,6, Decandiol-1,10, Nonandiol-1,9, Dodecandiol-1,12, Hexadecandiol-1,16, Octadecandiol-1,12, das von Fa. Henkel als Pripol 2023 vertriebene Diol auf Basis hydrierter Dimerfettsäure, hydroaromatische Diole oder Bis-2-hydroxyalkylether aromatischer Diole. Niedermolekulare Oligoethylenglykole wie Di-Tri- oder Tetraethylenglykol können ebenfalls eingesetzt werden, sind jedoch weniger bevorzugt. Es können auch Gemische verschiedener Diole als Komponente a3) Verwendung finden.

Die Alkoholkomponente a) besteht vorzugsweise zu 30 bis 70, insbesondere 35 bis 65 Mol-% aus Alkoholen a1), 15 bis 45, insbesondere 20 bis 40 Mol-% aus Alkoholen a2) und zu 15 bis 45, insbesondere 15 bis 40 Mol-% aus Alkoholen a3), wobei sich die genannten Prozentsätze zu 100 ergänzen. Weiterhin werden die Komponenten a1) und a2) im Rahmen der gemachten Offenbarung vorzugsweise so ausgewählt, daß die Summe der aus Hydroxylgruppengehalt und Hydroxylfunktionalität errechenbaren Molekulargewichte der Komponenten a1) und a2) bei 6 000 bis 18 000 liegt, wobei vergleichsweise kurzkettige Polyether a1) mit langkettigen Polyethern a2) oder umgekehrt kombiniert werden können.

Bei der Isocyanatkomponente b) handelt es sich um mindestens eine Verbindung der Formel

R₁(NCO)ₓ

wobei R₁ und x die bereits oben genannte Bedeutung haben.

Bevorzugte Isocyanate sind solche der genannten allgemeinen Formel, für welche
- R₁: für einen aliphatischen, cycloaliphatischen, aromatischen oder araliphatischen Kohlenwasserstoffrest mit 6 - 21, insbesondere 6 - 10 Kohlenstoffatomen steht und
- x: für eine ganze oder (im statistischen Mittel) gebrochene Zahl von 1,8 bis 2,2, insbesondere 1,9 bis 2,1 und insbesondere 2 steht.

Als Komponente b) können somit sowohl der gemachten Definition entsprechende Einzelverbindungen als auch Gemische von Isocyanaten eingesetzt werden. Beispielhaft genannt seien Hexamethylendiisocyanat, Dodecamethylendiisocyanat, Isophorondiisocyanat, 4,4'-Diisocyanato-dicylohexylmethan, 1,4-Diisocyanato-cyclohexan, 2,4- und 2,6-Diisocyanatotoluol, 4,4'-Diisocyanato-diphenylmethan, dessen Gemische mit den 2,4'- und gegebenenfalls 2,2'-Isomeren und/oder mit seinen höheren Polyisocyanaten. Ebenfalls geeignet sind die an sich bekannten höherfunktionellen Lackpolyisocyanate, beispielsweise Biuret- oder Isocyanuratgruppen aufweisende Polyisocyanate auf Basis von Hexamethylendiisocyanat oder auch, als Teil der Komponente b), Monoisocyanat wie beispielsweise Hexylisocyanat, Phenylisocyanat oder Stearylisocyanat.

Die Komponente b) wird bei der Herstellung der erfindungsgemäßen Polyurethane in solchen Mengen eingesetzt, die einem NCO/OH-Äquivalentverhältnis, bezogen auf die Komponenten a) und b), von 0,8:1 bis 1,4:1, vorzugsweise 0,9:1 bis 1,2:1 entsprechen. Bevorzugt wird in Äquivalenz gearbeitet, wegen des oft unvermeidbaren Wassergehalts der hydrophilen Polyetherkomponenten ist jedoch auch oftmals ein geringer Isocyanatüberschuß im Rahmen der gemachten Offenbarung als Kompensation für die Feuchtigkeit vorteilhaft. Die Herstellung der erfindungsgemäßen Polyurethane erfolgt im allgemeinen innerhalb des Temperaturbereiches von 60 bis 150°C, vorzugsweise 80 bis 120°C. Zur Beschleunigung der Reaktion können die üblichen Katalysatoren wie z.B. Dibutylzinndilaurat oder Zinn(II)-octoat eingesetzt werden. Im allgemeinen ist die Endviskosität der erfindungsgemäßen Polyurethane bei der Reaktionstemperatur ausreichend niedrig, so daß auf inerte Lösungsmittel verzichtet werden kann. Insbesondere dann, wenn bei der Entwässerung der Alkohole a) durch azeotrope Destillation Lösungsmittel wie beispielsweise Toluol oder Xylol eingesetzt worden sind, können diese jedoch auch im Reaktionsgemisch verbleiben und erst nach der Reaktion entfernt werden.

Die Herstellung der erfindungsgemäßen Polyurethane erfolgt ein- oder mehrstufig. Unter eine einstufigen Reaktion ist hierbei die Umsetzung der Gesamtmenge der Komponente a) mit der Gesamtmenge der Komponente b) zu verstehen. Eine mehrstufige Reaktion besteht beispielsweise in einer Umsetzung eines Teils der Alkoholkomponente a), beispielsweise nur einer der Einzelkomponenten a1), a2) oder a3) mit der Gesamtmenge der Isocyanatkomponente b) und anschließende Umsetzung des dabei resultierenden NCO-Prepolymeren mit der restlichen Menge der Alkohole a). Die Reihenfolge der Umsetzungen ist hierbei weitgehend ohne Bedeutung.

Bei den auf diese Weise hergestellten erfindungsgemäßen Polyurethanen handelt es sich im allgemeinen um farblose bis gelbliche Wachse mit Erweichungspunkten bzw. -bereichen innerhalb des Temperaturbereichs von 40 bis 80°C. Für den späteren Einsatz ist es oftmals vorteilhaft, die erfindungsgemäßen Polyurethane mit Zusätzen wie z.B. Formulierungsmitteln, Lösungsmitteln, Wasser, Emulgatoren oder Stabilisatoren zu flüssigen Formulierungen zu vermischen.

Die erfindungsgemäßen Polyurethane eignen sich zur Verdickung von wäßrigen bzw. überwiegend wäßrigen Systemen wie Farben, Druck- und Pigmentpasten, Füllstoff-und Pigmentdispersionen, Textil-, Leder- und Papierhilfsmittel, Zubereitungen für die Erdölförderung, Zubereitungen von Waschmitteln, Klebstoffen, Wachsen für Polituren, Formulierungen für pharmazeutische und veterinäre Zwecke, Pflanzenschutzzubereitungen, kosmetische Artikel usw. Auch das Wasser selbst kann mit den erfindungsgemäßen Polyurethanverdickern angedickt werden, um dann gegebenenfalls mit weiteren Zusätzen versetzt zu werden oder selbst zu wäßrigen Zubereitungen zugesetzt zu werden. Die erfindungsgemäßen Verdicker können auch in Gemischen mit anderen Verdickungsmitteln eingesetzt werden wie z.B. solchen auf Basis von Polyacrylaten, Cellulosederivaten oder anorganischen Verdickungsmitteln.

Beispiele für wäßrige Systeme, die erfindungsgemäß verdickt werden können, sind wäßrige Polyacrylatdispersionen, wäßrige Dispersionen von Mischpolymerisaten olefinisch ungesättigter Monomerer, wäßrige Polyvinylacetatdispersionen, wäßrige Polyurethandispersionen, wäßrige Polyesterdispersionen und insbesondere gebrauchsfertige Zubereitungen der oben bereits angesprochenen Art auf Basis derartiger Dispersionen.

Die erfindungsgemäßen Verdickungsmittel können selbstverständlich in Substanz, vorzugsweise als Granulat oder gegebenenfalls Pulver, eingesetzt werden. Bevorzugte Verwendung finden jedoch flüssige Formulierungen, die neben den erfindungsgemäßen Polyurethanen Wasser, Lösungsmittel wie Butyldiglykol, Isopropanol, Methoxypropylacetat, Ethylen- und/oder Propylenglykol, nichtionische Emulgatoren, Tenside und/oder gegebenenfalls weitere Zusatzstoffe enthalten, da dadurch die Einarbeitung der erfindungsgemäßen Verdickungsmittel in wäßrige bzw. überwiegend wäßrige Systeme wesentlich erleichtert wird.

Die gebrauchsfertigen Zubereitungen der erfindungsgemäßen Verdickungsmittel stellen besonders bevorzugt wäßrige Lösungen oder Dispersionen mit einem Feststoffgehalt von 10 bis 80, vorzugsweise 30 bis 60 und besonders bevorzugt 40 bis 50 Gew.-% dar.

Die Menge an erfindungsgemäßen Verdickungsmitteln, die den wäßrigen bzw. überwiegend wäßrigen Systemen zum Erreichen der gewünschten Verdickung zugesetzt werden, hängt vom jeweiligen Verwendungszweck ab und kann vom Fachmann in wenigen Versuchen ermittel werden. In der Regel werden 0,05 bis 10 Gew.-%, bevorzugt 0,1 bis 4 Gew.-%, besonders bevorzugt 0,1 bis 1 Gew.-% des erfindungsgemäßen Verdickungsmittels eingesetzt, wobei sich diese Prozentangaben auf den Feststoff des Verdickungsmittels einerseits und den Feststoffgehalt des zu verdickenden wäßrigen Systems andererseits beziehen.

Die Beurteilung der Wirksamkeit der erfindungsgemäßen Verdickungsmittel kann nach bekannten Methoden erfolgen, z.B. im Haake-Rotationsviskosimeter, im Stormer- oder Brookfield-Viskosimeter oder im ICI-Viskosimeter.

Die nachstehenden Beispiele dienen der weiteren Erläuterung der Erfindung. Alle Molekulargewichtsangaben beziehen sich auf das aus OH-Gehalt und OH-Funktionalität errechenbare mittlere Molekulargewicht der betreffenden Alkohole.

### Beispiele

### Herstellbeispiel 1

748 g (0,2 Mol) eines auf Stearylalkohol gestarteten Polyethylenoxidpolyethers des mittleren Molgewichts von 3 740 (= a1) wurden zusammen mit 748 g (0,1 Mol) Polyethylenglykol des Molekulargewichts 7 480 (= a2) aufgeschmolzen und auf 120°C erhitzt und während 3 Std./10 mbar entwässert. Nach Zufügen von 5,9 g (0,05 Mol) Hexandiol-1,6 (= a3) wurden unter Rühren bei 80°C 46,2 g (0,275 Mol) Hexamethylendiisocyanat (HDI=b) auf einmal zugegeben. Nach 2 h bei 80°C wurde mit 200 mg Zinndioctoat katalysiert und die Reaktion während 2 h bei 120°C beendet. Nach Ausgießen auf Blech und Erkalten wurde ein schwach gelbliches Wachs erhalten.

### Herstellbeispiele 2 bis 8

Es wurde wie in Beispiel 1 beschrieben unter Beibehaltung der Komponenten a1) und a2) jedoch unter Variation der Art und/oder Menge der Komponenten a3) und b) gearbeitet. Einzelheiten sind der nachstehenden Tabelle 1 zu entnehmen.

**Tabelle 1**

| Herstell bsp. Nr. | Komponente a3) | | Diisocyanat (b) | NCO/OH-Verhältnis | Katalysator |
|---|---|---|---|---|---|
| | Struktur | Mol | | | |
| 2 | Hexandiol-1,6 | 0,1 | HDI | 1,05 | Dibutylzinndilaurat (200 mg) |
| 3 | Hexandiol-1,6 | 0,1 | 2,4-Toluylendiisocyanat | 1,1 | Diazobicyclooctan (100 mg) |
| 4 | Dodecandiol-1,12 | 0,035 | HDI | 1,0 | - |
| 5 | Dodecandiol-1,12 | 0,05 | HDI | 1,1 | Titantetrabutylat (200 mg) |
| 6 | Dodecandiol-1,12 | 0,1 | HDI | 1,1 | Dibutylzinndilaurat (200 mg) |
| 7 | Dodecandiol-1,12 | 0,05 | Isomerengemisch aus 2,4 und 2,6-Toluylendiisocyanat 80:20 | 0,95 | Dibutylzinndilaurat (200 mg) |
| 8 | Octadecandiol-1,18 | 0,025 | HDI | 1,1 | Dibutylzinndilaurat (200 mg) |

### Herstellungsbeispiel 9

196 g (0,2 Mol) eines auf Dodecanol-1 gestarteten Polyethylenoxidpolyethers (= a1) vom mittleren Molgewicht von 980 wurden nach Entwässerung mit 106,4 4,4'-Diisocyanato-dicyclohexylmethan (technisches cis-/trans-Isomerengemisch) (= b) 12 h bei 100°C unter Rühren umgesetzt. Anschließend wurden 1 360 g (0,2 Mol) entwässertes Polyethylenglykol des Molekulargewichts 6 800 (= a2) und 19,4 g (0,1 Mol) Tetraethylenglykol (= a3) eingerührt, nach 1 h 500 mg Zinndioctoat zugegeben und die Reaktion während 5 h bei 120°C zu Ende geführt. Nach Abkühlen wurde ein nahezu farbloses Wachs erhalten.

### Herstellungsbeispiel 10

600 g (0,2 Mol) Polyethylenglykol des Molekulargewichts 3 000 (= a2) wurden entwässert und bei 100°C mit 122,1 g (0,55 Mol) Isophorondiisocyanat (= b) vermischt und unter Rühren im Verlauf von 8 h umgesetzt (titrimetrische NCO-Kontrolle). Dann versetzte man das Prepolymer mit 1 200 g (0,3 Mol) eines auf einem technischen Fettalkoholgemisch (C₁₄ bis C₂₀, mittlere Kettenlänge 17,5) gestarteten Polyethylenoxidpolyethers mittleren Molgewichts von 4 000 (= a1) und anschließend mit 20,8 g (0,2 Mol) Neopentylglykol (= a3). Nach 1 h bei 120°C wurden 500 mg Dibutylzinndilaurat zugegeben und die Reaktion nach 3 h bei 120°C beendet (NCO-Kontrolle durch IR-Messungen). Es entstand ein hellgelbes Wachs.

### Herstellungsbeispiel 11

740 g (0,2 Mol) eines auf Behenylalkohol gestarteten Polyethylenoxidpolyethers des mittleren Molekulargewichts von 3 700 (= a1) und 680 g (0,1 Mol) eines Polyethylenglykols des mittleren Molekulargewichts 6 800 (= a2) und 1| Toluol wurden gemeinsam bei 120°C/l mbar azeotrop entwässert. Nach Abkühlen auf 60°C wurden 75 g (0,3 Mol) 4,4'-Diphenylmethandiisocyanat (= b) in flüssiger Form eingerührt und im Verlauf von 12 h zu einem Prepolymer umgesetzt. Dann wurden 9 g (0,1 Mol) Butandiol-1,4 (= a3) zugegeben und die Temperatur auf 100°C erhöht. Nach 4 h unter Rühren bei 100°C war IR-spektroskopisch kein NCO mehr nachweisbar. Man erhielt nach Abkühlen ein gelbes Wachs.

### Anwendungsbeispiele:

Die nachfolgenden Beispiele A1 bis A 11 zeigen, daß mit den erfindungsgemäßen Verdickungsmitteln Dispersionsfarben erhalten werden können, die verbesserte Verarbeitungseigenschaften (z.B. Sedimentationsstabilität des Anstrichmittels, dessen Auftragbarkeit, Verlauf und Eignung zur Bildung hoher Schichtdicken) zeigen. Hierzu wurden per Pinselauftrag der Dispersionsfarbe auf Kunststoffolie (Linetta-Folie) hergestellten Filme mit einer Skala von 1 (sehr gut) bis 5 (sehr schlecht) beurteilt. Die Viskositäten der mit den erfindungsgemäßen Verdickungsmitteln hergestellten Farben sowie die Fließgrenzen wurden mit Haake- bzw. ICI-Viskosimeter bei 1 bis 80 bzw. bei 10⁴ s⁻¹ gemessen.

### Beispiele A1 bis A 11

Mit jeweils 5 g Polyurethanverdicker wurde eine Glanzdispersion auf Acrylatbasis folgender Zusammensetzung hergestellt.

| | |
|---|---|
| AMP 90¹⁾ | 2,5 g |
| ®Borchigen ND²⁾, 25 %ig in Wasser | 13,6 g |
| ®Borchigen DFN²⁾, 100 %ig | 5,0 g |
| ®Neocryl AP 2860 ³⁾ | 3,2 g |
| TiO₂-RHD-2 | 225,0 g |
| Methoxybutanol | 17,0 g |
| Propylenglykol | 17,0 g |
| Butyldiglykol | 17,0 g |
| Wasser | 44,7 g |
| ®Neocryl XK 62⁴⁾ | 540,0 g |
| Wasser | 110,0 g |

| | |
|---|---|
| 1) (2-Amino-2-methylpropanol-1, 90 %ig in Wasser), Angus Chemie GmbH, Essen | |
| 2) Netzmittel, Gebr. Borchers AG, Goslar | |
| 3) Entschäumer, ICI Resins, Runcorn, England | |
| 4) anionische Dispersion auf Basis Acrylat/Styrol, ICI Resins | |

Die Ergebnisse der anwendungstechnischen Prüfungen sind in Tabelle 2 aufgeführt.

**Tabelle 2**

| Bsp.-Nr. | Verdicker aus Herstellbeispiel Nr. | Viskosität bei [s⁻¹] [Pa.s] | | | Verarbeitungseigenschaften |
|---|---|---|---|---|---|
| | | 1 | 10 | 10⁴ | |
| A1 | 1 | 28,3 | 22,1 | 0,17 | 2 |
| A2 | 2 | 22,7 | 20,2 | 0,16 | 2 |
| A3 | 3 | 22,0 | 17,8 | 0,14 | 1-2 |
| A4 | 4 | 28,1 | 18,1 | 0,16 | 2-3 |
| A5 | 5 | 26,5 | 17,2 | 0,15 | 1 |
| A6 | 6 | 23,3 | 19,3 | 0,15 | 1 |
| A7 | 7 | 34,2 | 27,7 | 0,16 | 3 |
| A8 | 8 | 29,3 | 21,2 | 0,15 | 1 |
| A9 | 9 | 27,3 | 19,6 | 0,14 | 2 |
| A10 | 10 | 21,6 | 27,4 | 0,16 | 1 |
| A11 | 11 | 29,2 | 21,8 | 0,15 | 1-2 |
| Vergl.-Bsp.1^{a)} | | 17,3 | 16,1 | 0,07 | 5^{b)} |

| | | | | | |
|---|---|---|---|---|---|
| a) Vergleichsbeispiel 1 entspricht Anwendungsbeispiel A1, jedoch wurde als Verdicker ein Polyurethan eingesetzt, welches in Analogie zu Herstellungsbeispiel 1 jedoch ohne Mitverwendung der Komponente a3) und entsprechender Verminderung der Komponente b) (gleiches NCO/OH-Äquivalent-Verhältnis) hergestellt worden war. | | | | | |
| b) Insbesondere schlechter Verlauf und geringe Schichtdicke. | | | | | |

### Beispiel A 12

Unter Zugabe von 1,4 g Polyurethanverdicker aus Herstellungsbeispiel 1 wurde eineDispersionsfarbe folgender Zusammensetzung hergestellt:

| | |
|---|---|
| Wasser | 30,5 g |
| ®Borchigen ND¹⁾, 25 %ig in Wasser | 8,6 g |
| ®Borchigen DFN¹⁾, 100 %ig | 1,4 g |
| ®Nopco 8034 E²⁾ | 2,0 g |
| ®Mergal KM 101³⁾ | 2,0 g |
| Propylenglykol | 33,3 g |
| Butyldiglykol | 33,3 g |
| Methoxybutanol | 33,3 g |
| TiO₂-RHD 2⁴⁾ | 220,0 g |
| ®Mowilith DM 777⁵⁾ | 585,0 g |
| NH₄OH | 4,0 g |
| ®Südranol 230 | 30,0 g |

| | |
|---|---|
| 1) Netzmittel, Gebr. Borchers AG, Goslar | |
| 2) Fa. Henkel, Düsseldorf | |
| 3) Fa. Riedel de Haen | |
| 4) Fa. Tioxide | |
| 5) Hoechst AG, Frankfurt/M 6) Süddeutsche Emulsionschemie, Mannheim | |

Die Dispersionsfarbe weist ausgezeichnete Verarbeitungseigenschaften auf. Die Viskositätsbestimmung ergab folgende Werte:

| **Viskosität bei [s**^{**-1**}**] [Pa·s]** | | | |
|---|---|---|---|
| 1 | 10 | 40 | 80 |
| 36 | 16 | 10 | 7 |

### Beispiel A 13

Unter Zugabe von 6,3 g Polyurethanverdicker aus Herstellungsbeispiel 1 wurde eine Dispersionsfarbe folgender Zusammensetzung hergestellt:

| | |
|---|---|
| Wasser | 42,0 g |
| AMP 90¹⁾ | 2,6 g |
| ®Borchigen DFN²⁾, 25 %ig in Wasser | 15,1 g |
| ®Nopco 8034 E³⁾ | 1,0 g |
| ®Borchigen DFN²⁾, 100 %ig | 1,0 g |
| ®Mergal KM 101⁴⁾ | 2,1 g |
| TiO₂-RHD 2⁵⁾ | 233,0 g |
| Propylenglykol | 20,0 g |
| Butyldiglykol | 10,0 g |
| Wasser | 100,7 g |
| ®Ubatol 150⁶⁾ | 560,0 g |

| | |
|---|---|
| 1) Netzmittel, Augus Chemie GmbH, Essen | |
| 2) Netzmittel, Gebr. Borchers AG, Goslar | |
| 3) Fa. Henkel, Düsseldorf | |
| 4) Fa. Riedel de Haen | |
| 5) Fa. Tioxide | |
| 6) Fa. Cray Valley, Prod. Ltd.; Farborouth GB | |

Die Dispersionsfarbe weist ausgezeichnete Verarbeitungseigenschaften auf. Die Viskositätsbestimmung ergab folgende Werte:

| **Viskosität bei [s**^{**-1**}**] [Pa·s]** | | | |
|---|---|---|---|
| 1 | 10 | 40 | 80 |
| 14 | 9 | 6 | 4,5 |

### Beispiele A 14 und A 15

Diese Beispiele zeigen eine ausgewogene Wirksamkeit der erfindungsgemäßen Verdicker in einer Acrylat-Dispersion.

### Messung der Verdickerwirkung

Zu jeweils 98 g einer handelsüblichen Polyacrylatdispersion (®Dilexo RA3 der Firma Condea, 2000 Hamburg) werden jeweils 2 g einer wäßrigen Lösung einer Verdicker-Zubereitung, die aus dem Polyurethan-Wirkstoff und Borchigen DFN (Fa. Borchers, Goslar) im Gew.-Verhältnis 1:1 besteht, zugegeben. Die Konzentration der Lösungen liegt jeweils bei 2,5 Gew.-%, bezogen auf den Polyurethanverdicker. Die so hergestellten Gemische werden 5 Minuten bei 2 000 U/Min. gerührt. Die so erhaltenen homogenen Dispersionen werden 24 h bei 23°C gelagert.

Die Viskosität der so erhaltenen Dispersionen wurden im Haake-Viskosimeter RV 100, Meßkörper SV DIN, bei 23°C und 10,3 s⁻¹ gemessen:

| Beispiel Nr. | Verdicker aus Herstellbeispiel Nr. | Viskosität [Pa·s] |
|---|---|---|
| A 14 | 2 | 9,9 |
| A 15 | 5 | 7,8 |

### Beispiele 16 bis 19

Es wurde gearbeitet wie in Beispielen A 14 und A 15 beschrieben, jedoch wurden variierende Mengen Verdicker eingesetzt. Die Ergebnisse sind in Tabelle 3 zusammengestellt.

**Tabelle 3**

| Beispiel Nr. | Verdicker aus Herstellbeispiel Nr. | Viskosität [Pa·s] bei [s⁻¹] 10 | Zugabe [g] Lösung |
|---|---|---|---|
| A 16 | 2 | 5,5 | 1 |
| A 17 | 2 | 12,5 | 4 |
| A 18 | 5 | 3,2 | 1 |
| A 19 | 5 | 13,9 | 4 |

### Beispiele A 20 bis A 23

Diese Beispiele zeigen die Wirksamkeit der erfindungsgemäßen Verdicker beim Verdicken von Wasser (Tabelle 4).

**Tabelle 4**

| Beispiel Nr. | Verdicker aus Herstellbeispiel Nr. | Viskosität [Pa·s] bei [s⁻¹] 10 | Dosierung [%] |
|---|---|---|---|
| A 20 | 5 | 2,0 | 2,5 |
| A 21 | 6 | 0,6 | 2,5 |
| A 22 | 5 | 25,0 | 5,0 |
| A 23 | 6 | 27,1 | 5,0 |

## Patentansprüche

1. Als Verdickungsmittel für wäßrige Systeme geeignete, wasserlösliche oder -dispergierbare Polyurethane, die in ein- oder mehrstufiger, unter Einhaltung eines NCO/OH-Äquivalentverhältnisses von 0,8:1 bis 1,4:1 erfolgter Reaktion hergestellte Umsetzungsprodukte
einer Alkoholkomponente a) mit
einer Isocyanatkomponente b) einer (mittleren) NCO-Funktionalität von 1,5 bis 2,5, bestehend aus mindestens einem organischen Isocyanat der Formel
R₁(NCO)ₓ
darstellen, dadurch gekennzeichnet, daß die Alkoholkomponente a)
a1) zu 25 bis 80 Mol-% aus Verbindungen der Formel
R₂-O-A_{y}H
a2) zu 10 bis 60 Mol-% aus Verbindungen der Formel
HO-A_{z}-(BO)_{z'}-A_{z''}-H
und zu
a3) 5 bis 60 Mol-% aus Verbindungen der Formel
HO-R₃-OH
besteht, wobei in diesen Formeln
R₁ für einen gegebenenfalls inerte Substituenten aufweisenden aliphatischen, cycloaliphatischen, aromatischen oder araliphatischen Kohlenwasserstoffrest mit 6 bis 28 Kohenstoffatomen steht,
R₂ für einen aliphatischen Kohlenwasserstoffrest mit 12 bis 24 Kohlenstoffatomen steht,
R₃ für einen aliphatischen oder araliphatischen, gegebenenfalls Ethersauerstoffatome aufweisenden Kohlenwasserstoffrest mit 4 bis 36 Kohlenstoffatomen steht, wobei zwischen den beiden Hydroxylgruppen mindestens 3 Kohlenstoffatome angeordnet sind, und wobei das Zahlenverhältnis von Kohlenstoffatomen zu gegebenenfalls vorliegenden Ethersauerstoffatomen bei mindestens 2,5:1 liegt,
A) für einen Alkylenoxidrest mit 2 oder 3 Kohlenstoffatomen steht, wobei der Anteil an Resten mit 3 Kohlenstoffatomen nicht größer als 40 Mol.-% ist, und unterschiedliche Alkylenoxidreste in beliebiger Verteilung vorliegen können,
B für einen aliphatischen Kohlenwasserstoffrest mit 2 bis 18 Kohlenstoffatomen, einen cycloaliphatischen Kohlenwasserstoffrest mit 4 bis 13 Kohlenstoffatomen oder einen aromatischen Kohlenwasserstoffrest mit 6 bis 15 Kohlenstoffatomen, steht,
x für eine ganze oder (im statistischen Mittel) gebrochene Zahl von 1,5 bis 2,5 steht,
y für eine Zahl von 5 bis 200 steht,
z und z" jeweils für Zahlen von 0 bis 400 stehen, mit der Maßgabe, daß die Summe z + z" 10 bis 400 ergibt, und
z' für 0 oder 1 steht,
wobei sich die genannten Prozentangaben zu 100 ergänzen und der Gewichtsanteil der Rest R₂ und R₃, bezogen auf das Gesamtgewicht der Komponente a), weniger als 15 Gew.-% ausmacht.

2. Polyurethane gemäß Anspruch 1, dadurch gekennzeichnet, daß die zu ihrer Herstellung eingesetzten Komponenten a) und b) unter Einhaltung eines NCO/OH-Äquivalentverhältnisses von 0,9:1 bis 1,2:1 eingesetzt worden sind.

3. Polyurethan gemäß Anspruch 1 und 2, dadurch gekennzeichnet, daß als Komponente a1) solche eingesetzt worden sind, für welche R₂ für einen aliphatischen Kohlenwasserstoffrest mit 16 bis 18 Kohlenstoffatomen steht.

4. Polyurethane gemäß Anspruch 1 bis 3, dadurch gekennzeichnet, daß als Komponenten a1) und a2) solche eingesetzt werden, für welche A ausschließlich für Ethylenoxidreste steht, y für eine Zahl von 30 bis 150 steht, z und z'' jeweils für Zahlen von 0 bis 300 stehen, mit der Maßgabe, daß die Summe z + z'' 100 bis 300 ergibt, und z' für 0 steht.

5. Polyurethane gemäß Anspruch 1 bis 4, dadurch gekennzeichnet, daß als Komponente a3) ausschließlich ω,ω'-Dihydroxyalkane mit 6 bis 18 Kohlenstoffatomen eingesetzt werden.

6. Verwendung der Polyurethane gemäß Anspruch 1 bis 5, gegebenenfalls in Kombination mit anderen Verdickungsmitteln zur Verdickung wäßriger Systeme.

## Claims

1. Polyurethanes soluble or dispersible in water, suitable as thickeners for aqueous systems, which are reaction products prepared in a reaction conducted in one or more steps while maintaining an NCO/OH equivalent proportion of from 0.8:1 to 1.4:1
of an alcohol component a) with
an isocyanate component b) having an (average) NCO-functionality of from 1.5 to 2.5, consisting of at least one organic isocyanate of the formula
R₁(NCO)ₓ ,
characterised in that the alcohol component a) consists
a1) of from 25 to 80 mol-% of compounds of the formula
R₂-O-A_{y}H
a2) of from 10 to 60 mol-% of compounds of the formula
HO-A₂-(BO)_{z'}-A_{z''}-H
and of
a3) from 5 to 60 mol-% of compounds of the formula
HO-R₃-OH
wherein in these formulae
R₁ represents an aliphatic, cycloaliphatic, aromatic or araliphatic hydrocarbon radical having 6 to 28 carbon atoms and optionally possessing inert substituents,
R₂ represents an aliphatic hydrocarbon radical having 12 to 24 carbon atoms,
R₃ represents an aliphatic or araliphatic hydrocarbon radical having 4 to 36 carbon atoms, optionally possessing ether oxygen atoms, wherein at least 3 carbon atoms are arranged between the two hydroxyl groups, and wherein the numerical ratio of carbon atoms to ether oxygen atoms optionally present is at least 2.5:1,
A) represents an alkylene oxide radical having 2 or 3 carbon atoms, wherein the proportion of radicals having 3 carbon atoms is not greater than 40 mol-%, and different alkylene oxide radicals may be present in any distribution,
B) represents an aliphatic hydrocarbon radical having 2 to 18 carbon atoms, a cycloaliphatic hydrocarbon radical having 4 to 13 carbon atoms or an aromatic hydrocarbon radical having 6 to 15 carbon atoms,
x represents an integer or (on statistical average) a fractional number from 1.5 to 2.5,
y represents a number of 5 to 200,
z and z'' each represent numbers from 0 to 400, with the proviso that the sum of z + z'' be 10 to 400, and
z' represents 0 or 1,
wherein the said percentages total 100 and the proportions by weight of the radicals R₂ and R₃, referred to the total weight of the component a), amounts to less than 15% by weight.

2. Polyurethanes according to claim 1, characterised in that the components a) and b) used in the production thereof have been used while maintaining an NCO/OH equivalent proportion of from 0.9:1 to 1.2:1.

3. A polyurethane according to claims 1 and 2, characterised in that components have been used as component a1) of the kind wherein R₂ represents an aliphatic hydrocarbon radical having 16 to 18 carbon atoms.

4. Polyurethanes according to claims 1 to 3, characterised in that components have been used as components a1) and a2) of the kind wherein A represents exclusively ethylene oxide radicals, y represents a number of from 30 to 150, z and z" each represent numbers of from 0 to 300, with the proviso that the sum of z+z'' be 100 to 300 and z' represents 0.

5. Polyurethanes according to claims 1 to 4, characterised in that exclusively w,w'-dihydroxyalkanes having 6 to 18 carbon atoms are used as component a3).

6. The use of the polyurethanes according to claims 1 to 5, optionally in combination with other thickeners for the thickening of aqueous systems.

## Revendications

1. Polyuréthannes solubles ou dispersables dans l'eau convenant à l'utilisation en tant qu'agents épaississants pour des compositions aqueuses, consistant en produits préparés dans une réaction en un ou plusieurs stades opératoires, en maintenant un rapport de 0,8:1 à 1,4:1 entre les équivalents de NCO et les équivalents d'OH, entre
un composant alcool a) et
un composant isocyanate b) ayant unc fonctionnalité (moyenne) en NCO de 1,5 à 2,5 et consistant en au moins un isocyanate organique de formule
R₁(NCO)ₓ
caractérisés en ce que le composant alcool a) consiste
a1) pour 25 à 80 mol% en composés de formule
R₂-O-A_{y}H
a2) pour 10 à 60 mol% en composés de formule
HO-A_{z}-(BO)_{z}'-A_{z}"-H
et
a3) pour 5 à 60 mol% en composés de formule
HO-R₃-OH
les symboles de ces formules ayant les significations suivantes :
R₁ représente un radical hydrocarboné aliphatique, cycloaliphatique, aromatique ou araliphatique contenant 6 à 28 atomes de carbone et portant éventuellement des substituants incrtes,
R₂ représente un radical hydrocarboné aliphatique en C₁₂-C₂₄,
R₃ représente un radical hydrocarboné aliphatique ou araliphatique, contenant 4 à 36 atomes de carbone et, le cas échéant, des atomes d'oxygène d'éther, les deux groupes hydroxy devant être séparés par au moins 3 atomes de carbone, et le rapport entre le nombre des atomes de carbone et le nombre des atomes d'oxygène d'éther éventuels étant d'au moins 2,5:1,
A) représente un radical d'oxyde d'alkylène à 2 ou 3 atomes de carbone, la proportion des radicaux à 3 atomes de carbone ne devant pas dépasser 40 mol%, et les divers radicaux d'oxydes d'alkylène pouvant se trouver en répartition quelconque,
B) représente un radical hydrocarboné aliphatique en C₂-C₁₈, un radical hydrocarboné cycloaliphatique en C₄-C₁₃ ou un radical hydrocarboné aromatique en C₆-C₁₅,
x est un nombre entier ou bien un nombre (en moyenne statistique) fractionnaire allant de 1,5 à 2,5,
y est un nombre allant de 5 à 200,
z et z" sont des nombres allant chacun de 0 à 400, sous réserve que la somme z+z" a une valeur de 10 à 400, et
z' est égal à 0 ou 1,
les pourcentages indiqués se complétant à 100 et la proportion en poids des radicaux R₂ et R₃, par rapport au poids total du composant a), représentant moins de 15 % en poids.

2. Polyuréthannes selon la revendication 1, caractérisés en ce que les composants a) et b) ont été mis en oeuvre pour leur préparation en respectant un rapport de 0,9:1 à 1,2:1 entre les équivalents de NCO et les équivalents d'OH.

3. Polyuréthannes selon les revendications 1 et 2, caractérisés en ce que l'on a mis en oeuvre un composant a1) pour lequel R₂ représente un radical hydrocarboné aliphatique en C₁₆-C₁₈.

4. Polyuréthannes selon les revendications 1 à 3, caractérisés en ce que l'on a utilisé des composants a1) et a2) pour lesquels A représente exclusivement des groupes oxyde d'éthylène, y est un nombre allant de 30 à 150, z et z" sont des nombres allant de 0 à 3, sous réserve que la somme z+z" représente une valeur de 100 à 300, et z' est égal à 0.

5. Polyuréthannes selon les revendications 1 à 4, caractérisés en que l'on a utilisé en tant que composant a3) exclusivement des ω,ω'-dihydroxyalcanes en C₆-C₁₈.

6. Utilisation des polyuréthannes selon les revendications 1 à 5, éventuellement en combinaison avec d'autres agents épaississants, pour l'épaississement de compositions aqueuses.
